# EUROPEAN PATENT APPLICATION

(11) **EP 3 525 070 A1**
(43) Date of publication of application: **14.08.2019**
(21) Application number: 18156432.9
(22) Date of filing: 13.02.2018
(51) Int. Cl.: G06F 3/038, G06F 1/16, G06F 3/0346

(54) **AUTOMATIC ADJUSTMENT OF DISPLAY ORIENTATION OF A PORTABLE DEVICE**

(71) Applicant: Vestel Elektronik Sanayi ve Ticaret A.S., 45030 Manisa (TR)
(72) Inventor: CUBUKCU, Baran, 45030 Manisa (TR); ÖZBAY, Mustafa Caner, 45030 Manisa (TR)
(74) Representative: Ascherl, Andreas

(57) **Abstract**

The present invention refers to a method for adjusting the orientation of displayed content outputted by a screen (6) of a portable device (1), in particularly a smart watch. The method comprises the steps:
Providing the portable device (1), wherein the portable device (1) comprises a main body (2), wherein the main body (2) comprises the screen (6) and a processor unit, wherein at least one strap means (8, 10), in particularly a first strap (8) and a second strap (10), is arranged at the main body (2), wherein the strap means (8, 10) comprises at least a first thermal sensor element (9) and a second thermal sensor element (11), wherein each thermal sensor element (9, 11) is arranged in a predefined distance of more than 4mm away from the main body (2) and wherein the thermal sensor elements (9, 11) are arranged in a distance from each other of more than 5mm,
Attaching the portable device (1) to a body part of the person, in particularly to an arm or leg of a person (20),
Detecting temperature changes or temperature values by means of the sensor elements (9, 11) in dependency of movements of the body part,
Transferring the detected temperature changes or values to the processor unit,
Determining a sequence of predefined values or variances in dependency of the detected temperature changes or temperature values, wherein the processor unit determines the sequence,
Adjusting the orientation of displayed content in dependency of the determined sequence.

## Description

The present invention refers according to claim 1 to a method for adjusting the orientation of displayed content outputted by a display of a portable device, according to claim 11 to a strap and according to claim 14 to a smart watch and according to claim 15 to a computer program product.

### Background of the invention

It is recognised with respect to smart watches that such devices do not adjust screen orientation and if you wear it wrong then the displayed dial is displayed upside down and not upright to the user.

### Object of the invention

Thus, it is an object of the present invention to provide an alternative or better solution, in particularly a solution that eases usage of portable devices, like smart watches.

### Description of the invention

The before mentioned object is solved by a method according to claim 1. Said method for adjusting the orientation of displayed content outputted by a display of a portable device, in particularly a smart watch, preferably comprises at least the steps: Providing the portable device, wherein the portable device comprises a main body, wherein the main body comprises the screen and a processor unit, wherein at least one strap means, in particularly a first strap and a second strap, is arranged at the main body, wherein the strap means comprises at least a first thermal sensor element and a second thermal sensor element, wherein each thermal sensor element is preferably arranged in a predefined distance of more than 4mm away from the main body and wherein the thermal sensor elements are preferably arranged in a distance from each other of more than 5mm. The method further comprises the step of attaching the portable device to a body part of the person, in particularly to an arm or leg of a person, the step of detecting temperature changes or temperature values by means of the sensor elements in dependency of movements of the body part, the step of transferring the detected temperature changes or values to the processor unit, the step of determining a sequence of predefined values or variances in dependency of the detected temperature changes or temperature values, wherein the processor unit determines the sequence, and the step of adjusting the orientation of displayed content in dependency of the determined sequence.

The invention is related with consumer electronics and it can be applied to all consumer devices that may need to get walking direction information to use it for changing screen orientation. The device may be smartwatch, smart wristband, mobile phone, tablet and etc.

This solution is beneficial since the orientation of the displayed content automatically adjusts to the arrangement of the portable device at the body, in particularly arm, hand or leg, of the user.

Further preferred embodiments are subject-matter of the following specification passages and/or of the dependent claims.

According to a preferred embodiment of the present invention the first thermal sensor element detects in a first sequence first and last predefined values or variances and wherein the second thermal sensor element detects second predefined values or variances or the second thermal sensor element detects first and last predefined values or variances and wherein the first thermal sensor element detects in a second sequence second predefined values or variances. This embodiment is beneficial since the resulting sequence or sequences is/are very precise and can be used to adjust the orientation of the displayed content.

The orientation of the displayed content is according to a further preferred embodiment of the present invention adjusted between two orientations, wherein the second orientation is rotated with respect to the first orientation in an angel of preferably 90° or 180°. This embodiment is beneficial since the user can attach the portable device in a first orientation or a second orientation to the body. In case the portable device is a smart watch, the smart watch can be attached in two different orientation to the same body part. Thus, the straps or the strap means can be provided in new manner since the smart watch is not limited to a specific orientation any more.

The strap means comprises according to a further preferred embodiment of the present invention a communication unit for transmitting data or signals detected by the first thermal sensor means and the second thermal sensor means to the processor unit. The communication unit transmits the data or signals according to a further preferred embodiment of the present invention in a wireless manner to a receiving unit, wherein the receiving unit is arranged inside the main body and operated or controlled by the processor unit. It is alternatively possible that the thermal sensors are individually or together coupled by wire or cable to the main body respectively the processer unit. The wire or cable can be part of the strap means or can be attached to the strap means.

According to a further preferred embodiment of the present invention a registration of the arm or leg to which the portable device is coupled is carried out, wherein the registration defines if the arm or leg is a left or right arm or leg. The registration is preferably stored ones or each time the portable device is used. It is further possible that the portable device comprises an identification means for identifying a user, like a finger print sensor. In case the identification means identifies a new or different user preferably a new registration is carried out. In case the user is a prior user, a prior set registration can be restored. Thus, a user identification is preferably carried out, wherein the registration is preferably stored with respect to a specific user, wherein the operation of the portable device is operated in dependency of predefined configurations, wherein the individual configurations are stored on the portable device or on a server, in particularly a cloud server.

The portable device and/or the strap means comprises according to a further preferred embodiment of the present invention a step counter or an acceleration sensor, wherein the step counter or acceleration sensor outputs signals or data, wherein the signals or data is processed by the processor unit to determine a movement direction of the user to which the portable device is attached. The orientation of the portable device is preferably determined by means of the sequence and the signals or data of the acceleration sensor or step counter and/or by means of the registration. The step counter and/or acceleration sensor preferably allows to differentiate between walking backward and/or forward. This is possible since the body movements during forward walking (or running) are different to backward walking (or running). This embodiment is beneficial since a determined sequence can be validated with walking movements and/or linked to walking movements.

The sequence is defined according to a further preferred embodiment of the present invention by the time interval between two or multiple, in particularly more than two or up to 5, 10, 20 or 50, outputs of predefined data or signals of the first thermal sensor element and by the time interval between two or multiple, in particularly more than two or up to 5, 10, 20 or 50, outputs of predefined data or signals of the second thermal sensor element. It is preferably determined which time interval is longer, wherein the displayed content is orientated in such a manner to be upright with respect to a coupling element for arranging an end of the strap means. The main body preferably comprises a first coupling element for arranging a first end of the strap means and another coupling element for arranging another end of the strap means. The upright orientation of the displayed content is preferably set with respect to the coupling element which is closer to said thermal sensor element which caused the longer time interval. The first coupling element is arranged on one side of the main body and the second coupling element is arranged on an opposing side of the main body. The screen is preferably arranged between the first and second coupling element.

The predefined data or signal indicates according to a further preferred embodiment of the present invention a temperature different to the ambient temperature, in particularly a temperature between 25°C and 37°, in particularly between 26°C and 32°C. This embodiment is beneficial since the outer temperature of the body of the person is preferably detected, in particularly the temperature on the outer surface of clothes, in particularly pants. Ambient temperature preferably defines a temperature of 20°C. Data and/or signals are preferably detected as long as a temperature difference between the ambient temperature and the outer body or clothes temperature is present, in particularly as long as the ambient temperature is lower compared to the outer body or clothes temperature. Closer preferably means direct distance via the strap means or along the strap means or via the connected strap elements but does not describe the linear distance through the air or via the main body.

The before mentioned object is also solved by an strap according to claim 11. The strap is preferably a strap of a smart watch respectively for smart watches. The strap preferably comprises at least a longitudinal main structure, in particularly a first strap element and/or a second strap element, a coupling means, in particularly two coupling elements, for coupling the longitudinal main structure to a main body of a portable device, and a first thermal sensor element and a second thermal sensor element for detecting thermal values or variances and a data or signal communication unit for transmitting the detected thermal values or variances to the processor unit. The first thermal sensor element and the second thermal sensor element are preferably arranged at the longitudinal main structure, wherein the first thermal sensor element and the second thermal sensor element are arranged apart from each other, at least 5mm, and wherein the first thermal sensor element is arranged in a distance of at least 2 mm to the coupling means and wherein the second thermal sensor element is arranged in a distance of at least 2 mm to the coupling means. This embodiment is beneficial since portable devices, in particularly smart watches, can be upgraded or modified with such a strap means.

The longitudinal main structure comprises according to a further preferred embodiment of the present invention a first strap element and a second strap element, wherein the first strap element comprises a first coupling means for coupling with a first side of the main body and wherein the second strap element comprises a second coupling means for coupling with a second side of the main body. The first strap element and the second strap element preferably comprise connecting means, in particularly a clasp and holes or hook and loop fastener or magnetic connection, for connecting the first strap element and the second strap element. The first thermal sensor means is preferably part of the first strap element and wherein the second thermal sensor element is part of the second strap element. However, it is also possible to arrange both or all sensors at one strap. This embodiment is beneficial since the straps can be equipped with new or easy to open/close connecting means, since it is not required that the connecting means defines a direction how the strap needs to be arranged at the body part.

The first strap element and the second strap element are according to a further preferred embodiment of the present invention electrically connected, wherein an energy source provided as part of the first strap element or as part of the second strap element provides electric energy via the electric connection for operating both sensor elements or wherein each sensor element or strap element comprises an electric energy source, in particularly a battery. However, it is also possible that the portable device, in particularly an energy source within the main body, provides energy via the strap or straps to the sensors. An embodiment with an energy source outside the main body is beneficial since the operation of the sensor means does not drain the battery of the portable device.

The before mentioned object is also solved by a smart watch according to claim 14. The smart watch preferably comprises at least a strap described herein. The orientation of displayed content displayed by means of a display of the smart watch is adjusted in dependency of output of the first thermal sensor and second thermal sensor of the strap.

The before mentioned object is also solved by a computer program product for executing a method, wherein the method comprises at least the steps of determining a sequence of predefined values or variances in dependency of detected temperature changes or temperature values, wherein the predefined values or variances are provided by thermal sensor means of a smart watch according to claim 14 and adjusting the orientation of content displayed by said smart watch in dependency of the determined sequence.

Further benefits, goals and features of the present invention will be described by the following specification of the attached figures, in which exemplarily components of the invention are illustrated. Components of the devices, units and methods according to the invention, which match at least essentially with respect to their function can be marked with the same reference sign, wherein such components do not have to be marked or described multiple times with respect to said figures. In the following the invention is just exemplarily described with respect to the attached figures.
- Fig. 1a: schematically shows a portable device, in particularly a smart watch, having a strap means, wherein the strap means comprises thermal sensors,
- Fig. 1b: schematically shows an orientation of the displayed content with respect to the position of a thermal sensor,
- Fig. 2a-e: show different positions of the portable device with respect to a human body, wherein Fig. 2a and 2e show scenarios in which all sensors only detect ambient temperature, wherein Fig. 2b and 2d show scenarios in which one sensor detects ambient temperature and one sensor detects a surface temperature of the person and Fig. 2c show a scenario in which all sensors detect a surface temperature of the person.

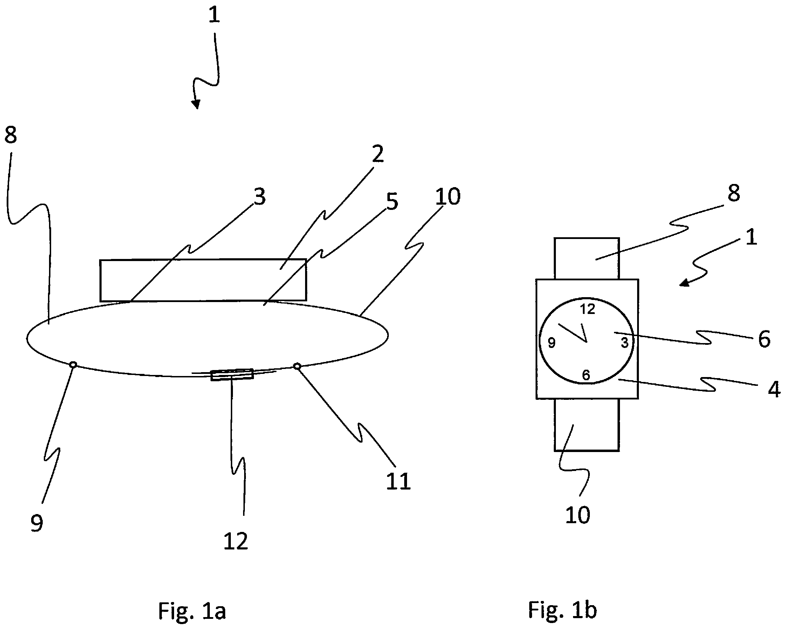

Fig. 1a shows a portable device 1. The portable device 1 is preferably a smart watch, which preferably comprises a screen 4, in particularly a touch screen, a processor unit, a communication means, in particularly NFC, Bluetooth, WLAN, 4G, 5G, etc., GPS, and an electric energy source. One of the before mentioned components or multiple or all of the before mentioned components are preferably arranged inside or as part of a main body 2. A first strap 8 and a second strap 10 are preferably arranged at the main body 2. The first strap 8 preferably comprises a first thermal sensor element 9 and the second strap 10 preferably comprises a second thermal sensor element 11. One end of each strap 8, 10 is coupled with the main body 2 and the other ends of straps 8, 10 are preferably connected or connectable by a connection means 12. The first strap 8 is preferably coupled via a first coupling element 3 to the main body 2 and the second strap 10 is preferably coupled via a second coupling element 5 to the main body 2.

Fig. 1b shows a different view of the portable device of fig. 1a. The displayed content 6 is orientated in such a manner to be upright with respect to the second coupling element 5, which connects the main body 2 and the second strap 10. Thus, the display content 6 is orientated in this situation upside down with respect to the first coupling element 3.

The orientation of the content depends on sensor data of the first and second thermal sensors 9, 11.

Thus, the system preferably uses 2 pieces of thermal sensors placed on watchband 8, 10. The placement of sensors is preferably not next to each other but preferably apart from each other. The system respectively a processor unit of the portable device 1 will get data from thermal sensors 9, 11 and then process the information in main SOC (or processor device) of smartwatch 1. The sensor placement can be as shown in Fig. 1 a but different systems may need them to be placed differently.

While a person is walking, one of the thermal sensors 9, 11 leaves the human body first and then the second one leaves the human body. So, accordingly the smartwatch SOC or processor unit will understand which way the person is moving towards.

If sensor 11 leaves the body first just before t2 timing, then smartwatch will place the number 6 in clock at the same side that sensor 11 is placed. It's said that number 6 will be placed to the same side that sensor 11 is placed but it can even be another application that needs to know the direction of the person so the application can take necessary actions just after learning the way person is moving through by using the proposed system.

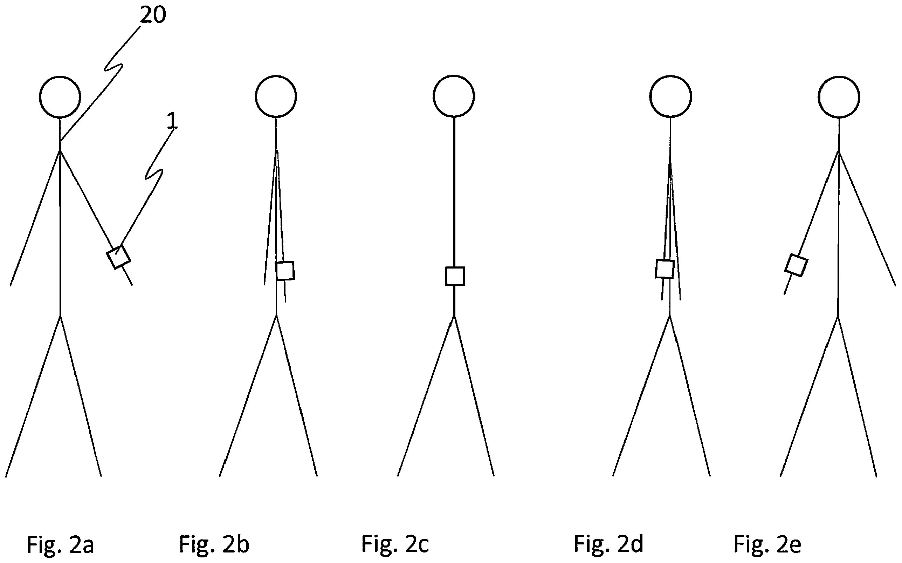

Fig. 2a-e show a person 20 moving the arms forward and backward. It should be understood that the illustrated person preferably walks forward.

As shown in fig. 1a and 1b, thermal sensors 9, 11 detect human body once they are next to human body. Since two or exactly two or more than two or up to two thermal sensors 9, 11 are placed apart from each other, one of the sensors 9, 11 detects human body first and leaves the human body first.

Fig. 2a shows that the person 20 takes a step and wrist is at the backside of the person 20 and the duration that both thermal sensors don't detect human body is t1.

Fig. 2b shows when person 20 keeps moving, then the arm moves through the front and one of the thermal sensor detects human body first. In this example sensor 11 detects the human body first. At that moment the sensor 9 doesn't detect human body because it's still not in line of sight of human body.

Fig. 2c shows that both sensors 9, 11 detect human body because both of them are next to human body.

Fig. 2d shows that the person 20 keeps moving and sensor 11 leaves the human body first while sensor 9 still in line of sight of human body.

Fig. 2e shows that both sensors don't detect human body since both of them left the body already and are not in line of sight of human body anymore. This is defined as period t2.

People walks like t2>t1 in daily life which means the arm of the person 20 takes much more time when it's in front of human body than it's at the back of the human body. For some cases t1 timing can even be zero which means the arm of the person doesn't left the whole body towards the back direction. By using this information, the processor unit or smartwatch SOC can understand the direction of the person 20. If sensor 11 leaves the body first just before t2 timing, then the processor unit or smartwatch SOC can know that the person 20 is moving through from sensor 9 to sensor 11.

Both thermal sensors 9, 11 have a connection with processor unit or smartwatch SOC. This connection can be established via wireless systems, like Bluetooth or via direct connection by connecting output pins of thermal sensors to processor unit or smartwatch SOC directly.

When processor unit or SOC understands the direction of the person 20 then it will make orientation on clock for example (let's say, smartwatch makes orientation in watchface of the clock that is shown on screen).

Thus, the invention refers to a method for adjusting the orientation of displayed content outputted by a screen 6 or display of a portable device 1, in particularly a smart watch. The method preferably comprises the steps providing the portable device 1, wherein the portable device 1 comprises a main body 2, wherein the main body 2 comprises the screen 6 and a processor unit, wherein at least one strap means 8, 10, in particularly a first strap 8 and a second strap 10, is arranged at the main body 2, wherein the strap means 8, 10 comprises at least a first thermal sensor element 9 and a second thermal sensor element 11, wherein each thermal sensor element 9, 11 is arranged in a predefined distance of preferably more than 1 mm or more than 2mm or more than 4mm away from the main body 2 and wherein the thermal sensor elements 9, 11 are arranged in a distance from each other of preferably more than 1 mm or more than 2mm or more than 5mm, attaching the portable device 1 to a body part of the person, in particularly to an arm or leg of a person 20, detecting temperature changes or temperature values by means of the sensor elements 9, 11 in dependency of movements of the body part, transferring the detected temperature changes or values to the processor unit, determining a sequence of predefined values or variances in dependency of the detected temperature changes or temperature values, wherein the processor unit determines the sequence, adjusting the orientation of displayed content in dependency of the determined sequence.

**List of reference numbers**

| | | | |
|---|---|---|---|
| 1 | portable device | 8 | first strap |
| 2 | main body | 9 | first thermal sensor |
| 3 | first coupling element | 10 | second strap |
| 4 | screen | 11 | second thermal sensor |
| 5 | second coupling element | 12 | connecting means |
| 6 | content | 20 | user |

## Claims

1. Method for adjusting the orientation of displayed content outputted by a screen (6) of a portable device (1), in particularly a smart watch,
at least comprising the steps:
Providing the portable device (1), wherein the portable device (1) comprises a main body (2), wherein the main body (2) comprises the screen (6) and a processor unit, wherein at least one strap means (8, 10), in particularly a first strap (8) and a second strap (10), is arranged at the main body (2), wherein the strap means (8, 10) comprises at least a first thermal sensor element (9) and a second thermal sensor element (11), wherein each thermal sensor element (9, 11) is arranged in a predefined distance of preferably more than 4mm away from the main body (2) and wherein the thermal sensor elements (9, 11) are arranged in a distance from each other of preferably more than 5mm,
Attaching the portable device (1) to a body part of the person, in particularly to an arm or leg of a person (20),
Detecting temperature changes or temperature values by means of the sensor elements (9, 11) in dependency of movements of the body part,
Transferring the detected temperature changes or values to the processor unit,
Determining a sequence of predefined values or variances in dependency of the detected temperature changes or temperature values, wherein the processor unit determines the sequence,
Adjusting the orientation of displayed content in dependency of the determined sequence.

2. Method according to claim 1,
**characterized in that**
the first thermal sensor element (9) detects in a first sequence first and last predefined values or variances and wherein the second thermal sensor element (11) detects second predefined values or variances
or
wherein the second thermal sensor element (11) detects first and last predefined values or variances and wherein the first thermal sensor element (9) detects in a second sequence second predefined values or variances.

3. Method according to claim 2,
**characterized in that**
the orientation of the displayed content is adjusted between two orientations, wherein the second orientation is rotated with respect to the first orientation in an angel of 180°.

4. Method according to claim 2 or 3,
**characterized in that**
the strap means (8, 10) comprises a communication unit for transmitting data or signals detected by the first thermal sensor means (9) and the second thermal sensor means (11) to the processor unit.

5. Method according to claim 4,
**characterized in that**
the communication unit transmits the data or signals in a wireless manner to a receiving unit, wherein the receiving unit is arranged inside the main body and operated or controlled by the processor unit.

6. Method according to any of the preceding claims,
**characterized by** a
registration of the arm or leg, wherein the registration defines if the arm or leg is a left or right arm or leg.

7. Method according to any of the preceding claims,
**characterized by**
a user identification, wherein the registration is stored with respect to a specific user, wherein the operation of the portable device is operated in dependency with predefined configurations, wherein the individual configurations are stored on the portable device or on a server, in particularly cloud server.

8. Method according to any of the preceding claims,
**characterized in that**
the portable device (1) comprises a step counter or an acceleration sensor, wherein the step counter or acceleration sensor outputs signals or data, wherein the signals or data is processed by the processor unit to determine a movement direction of the user to which the portable device (1) is attached,
wherein the orientation of the portable device (1) is determined by means of the sequence and the signals or data of the acceleration sensor or step counter and/or by means of the registration.

9. Method according to any of the preceding claims,
**characterized in that**
the sequence is defined by the time interval between two or multiple, in particularly more than two, outputs of predefined data or signals of the first thermal sensor element (9) and by the time interval between two or multiple, in particularly more than two, outputs of predefined data or signals of the second thermal sensor element (11), wherein it is determined which time interval is longer, wherein the displayed content is orientated in such a manner to be upright with respect to a coupling element for arranging an end of the strap means (8, 10), wherein the main body (2) comprises a first coupling element (3) for arranging a first end of the strap means (8) and another coupling element (5) for arranging another end of the strap means (10), wherein upright orientation of the displayed content is set with respect to the coupling element which is closer to said thermal sensor element (9, 11) which caused the longer time interval.

10. Method according to any of the preceding claims,
**characterized in that**
the predefined data or signal indicates a temperature different to the ambient temperature, in particularly a temperature between 25°C and 37°, in particularly between 26°C and 32°C.

11. Strap, in particularly for smart watch,
at least comprising
a longitudinal main structure, in particularly a first strap element (8) and/or a second strap element (10),
a coupling means, in particularly two coupling elements (3, 5), for coupling the longitudinal main structure to a main body (2) of a portable device (1),
a first thermal sensor element (9) and a second thermal sensor element (11) for detecting thermal values or variances and a data or signal communication unit for transmitting the detected thermal values or variances to the processor unit, wherein the first thermal sensor element (9) and the second thermal sensor element (11) are arranged at the longitudinal main structure, wherein the first thermal sensor element (9) and the second thermal sensor element (11) are arranged apart from each other, at least 5mm, and wherein the first thermal sensor element (9) is arranged in a distance of at least 2 mm to the coupling means (3) and wherein the second thermal sensor element (11) is arranged in a distance of at least 2 mm to the coupling means (5).

12. Strap according to claim 11,
**characterized in that**
the longitudinal main structure comprises a first strap element (8) and a second strap element (10), wherein the first strap element (8) comprises a first coupling means (3) for coupling with a first side of the main body (2) and wherein the second strap element (10) comprises a second coupling means (5) for coupling with a second side of the main body,
wherein the first strap element (8) and the second strap element (10) comprise connecting means (12) for connecting the first strap element (8) and the second strap element (10),
wherein the first thermal sensor means (9) is part of the first strap element (8) and wherein the second thermal sensor element (11) is part of the second strap element (10).

13. Strap according to claim 12,
**characterized in that**
the first strap element (8) and the second strap element (10) are electrically connected, wherein a energy source provided as part of the first strap element (8) or as part of the second strap element (10) provides electric energy via the electric connection for operating both sensor elements (9, 11)
or
wherein each sensor element (9, 11) or strap element (8, 10) comprises an electric energy source, in particularly a battery.

14. Smart watch (1),
at least comprising
a strap (8, 10) according to any of claims 11 to 13,
wherein the orientation of displayed content displayed by means of a screen (6) of the smart watch (1) is adjusted in dependency of output of the first thermal sensor (9) and second thermal sensor (11) of the strap (8, 10).

15. Computer program product for executing a method, wherein the method comprises at
least the steps:
Determining a sequence of predefined values or variances in dependency of detected temperature changes or temperature values, wherein the predefined values or variances are provided by thermal sensor means of a smart watch (1) according to claim 14,
Adjusting the orientation of content displayed by said smart watch (1) in dependency of the determined sequence.
